(19) Europäisches Patentamt
European Patent Office
Office européen des brevets

(11) **EP 0 631 984 B1**

(12) **EUROPÄISCHE PATENTSCHRIFT**

(45) Veröffentlichungstag und Bekanntmachung des Hinweises auf die Patenterteilung:
**19.08.1998 Patentblatt 1998/34**

(51) Int. Cl.$^6$: **C01F 5/20**, C01F 5/14, C08K 3/20

(21) Anmeldenummer: **94108028.5**

(22) Anmeldetag: **25.05.1994**

(54) **Magnesiumhydroxid und Verfahren zur dessen Herstellung**

Magnesium hydroxide and method for its preparation

Hydroxide de magnésium et procédé pour son préparation

(84) Benannte Vertragsstaaten:
**AT BE FR GB IT NL SE**

(30) Priorität: **26.05.1993 SK 53993**

(43) Veröffentlichungstag der Anmeldung:
**04.01.1995 Patentblatt 1995/01**

(73) Patentinhaber: **DUSLO, a.s.**
**SK-92703 Sala (SK)**

(72) Erfinder:
• **Skubla, Pavol**
**SK-92701 Sala (SK)**
• **Lencses, Ladislav**
**SK-95132 Horna (SK)**
• **Bezak, Stefan**
**SK-92701 Sala (SK)**
• **Kukova, Eva**
**SK-92701 Sala (SK)**

(74) Vertreter:
**Jeck, Anton, Dipl.-Ing.**
**Jeck Fleck Herrmann**
**Patentanwälte**
**Postfach 14 69**
**71657 Vaihingen/Enz (DE)**

(56) Entgegenhaltungen:
**EP-A- 0 365 347**

• **DATABASE WPI, Woche 8603, Derwent Publications Ltd., London (GB); AN 86-018579 & JP-A-60 243 155 (KYOWA KAGAKU KOGYO) 3. Dezember 1985**
• **CHEMICAL ABSTRACTS, Band 118, Nr. 6, 08 Februar 1993, Columbus, OH (US); EISLER et al., AN 41797, EISLER & AL.: 'Manufacture of magnesium hydroxide' & CS-B-275 256 (VYSKUMNY USTAV ANORGANICKE CHEMIE S. P.)**
• **PATENT ABSTRACTS OF JAPAN, Band 14, Nr. 123 (C-698) 08. März 1990 & JP-A-01 320 220 (NIPPON CHEM IND CO LTD) 26. Dezember 1989**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft Magnesiumhydroxid entsprechend der Formel $Mg(OH)_2$ mit neuen Charakteristiken sowie ein Verfahren zu dessen Herstellung.

$Mg(OH)_2$ gemäß der Erfindung hat einen besseren Wirkungsgrad und bessere Eigenschaften bei Verwendung als Verbrennungsverzögerer (Retarder) bei thermoplastischen synthetischen Harzen, ferner bei Wasseranstrichen sowie auch bei weiteren bekannten Anwendungen von $Mg(OH)_2$.

Es ist bekannt, daß für die Anwendung des Magnesiumhydroxids in einem thermoplastischen Material solches Magnesiumhydroxid am besten geeignet ist, dessen Oberfläche mit oberflächeaktiven Werkstoffen aufbereitet bzw. behandelt ist, das eine gut entwickelte Kristallinität aufweist und das chemisch nicht aktiv ist. Derartiges Magnesiumhydroxid besitzt eine kleine spezifische Oberfläche $S_{Bet}$, normalerweise weniger als 20 bis 25 $m^2$/g. Es ist ebenfalls wichtig, daß es bei der Einarbeitung/Einbringung des Magnesiumhydroxids in ein thermoplastisches Material zur gleichmäßigen Verteilung der sekundären Teilchen in dem Thermoplastvolumen kommt. Deshalb ist es wichtig, daß die sekundären Teilchen so klein wie möglich sind und deren Größenverteilung möglichst schmal ist. Magnesiumhydroxid ohne die geforderten Eigenschaften verschlechtert nach der Einarbeitung in die Thermoplaste wesentlich deren physikalischen Parameter, insbesondere deren Fließ- und Formeigenschaften, erzeugt in den Thermoplasten lokale Inhomogenitäten, die auf der Oberfläche des Materials als Farbflecken zum Ausdruck kommen. Herkömmliche Magnesiumhydroxide erfüllen nicht diese Vorraussetzungen und besitzen eine große spezifische Oberfläche $S_{Bet}$ -bis zu 100 $m^2$/g. Bekannte Verfahren, die zur Herstellung von speziellen Typen von Magnesiumhydroxid mit kleinen sekundären Teilchen und mit kleiner spezifischen Oberfläche geeignet sind, gehen von der Herstellung von großen Kristallen aus. Dazu gehören der Zusatz kleiner Mengen von Zitronensäure oder Salzen der Zitronensäure (JP 10.784/1958/) oder Entfernung von Kalziumkationen (JP 10.786/1958/), die die Bildung von großen Kristallen sichern. Andere Verfahren (EP 0 189 098 A2, US 4 698 379) führen zur Entstehung von einem morphologisch unterschiedlichen Magnesiumhydroxid mit kugelförmigen, nicht mit eckigen sekundären Teilchen, deren durchschnittliche Größe 5 - 500 $\mu$m beträgt. Nach dem Verfahren gemäß EP 0 365 347 A1 erhält man sekundäre Teilchen mit großer spezifischer Oberfläche $S_{Bet}$ von 20 bis 50 $m^2$/g. Magnesiumhydroxid gemäß US-PSn 4 098 762, US 4 145 404 und der FR 2 314 892 ist durch eine Kristallgröße in Richtung $\langle 101 \rangle$ größer als 800 Å und durch eine Kristallgitterdeformation in Richtung $\langle 101 \rangle$ nicht größer als $3.0 \times 10^{-3}$ charakterisiert. Sekundäre Teilchen, die aus solchen Kristallen entstehen, weisen sodann eine spezifische Oberfläche $S_{Bet}$ von weniger als 20 $m^2$/g auf.

Ein gemeinsamer Nachteil herkömmlicher Verfahren, bei denen große Kristalle entstehen, ist, daß mit verdünnten Lösungen gearbeitet werden muß, was mit hohem Energieaufwand verbunden ist. Ein Nachteil der Verfahren nach den genannten US-Patenten 4 098 762, 4 145 404 und der FR 2 314 892 ist, daß sich bei ihnen sehr große Kristalle - die Kristallgröße in Richtung $\langle 101 \rangle$ ist 800 bis 10 000 Å - bilden, deren Gestalt nicht definiert ist, d.h., sie können ein beliebiges Verhältnis zwischen der Kristallgrundflächenbreite und der Kristallhöhe aufweisen. Die Kristallgröße in Richtung $\langle 101 \rangle$ sagt nichts über die Kristallgestalt aus. Es können schmale und hohe, aber auch breite und niedrige Kristalle entstehen, sowie auch solche, deren Grundflächenbreite und Höhe etwa vergleichbar sind. Eine Aggregation von diesen formverschiedenen Kristallen führt zur Entstehung von sekundären Teilchen mit einer größeren spezifischen Oberfläche $S_{Bet}$ im Vergleich zu Fällen, wo sich gestaltshomogene Teilchen mit etwa gleicher Breite und Höhe ansammeln (Aggregation). Um minimale spezifische Oberfläche $S_{Bet}$ für sekundäre Teilchen, die durch eine Aggregation von gestaltungsunterschiedlichen Kristallen entstehen, zu erreichen, muß der obige Nachteil durch Bildung von großen Kristallen kompensiert werden. Die Beispiele 1 bis 5 gemäß US 4 145 404 geben eine Kristallgröße in Richtung $\langle 101 \rangle$ von 2250 - 5260 Å an.

Gemäß EP 0 214 494 ist es möglich, ein sehr feines $Mg(OH)_2$ mit durchschnittlicher Größe der Teilchen von 0,2 - 0,8 $\mu$m herzustellen. Dieses Magnesiumhydroxid bildet ein polydisperses, pulvriges System mit kleinen Teilchen. Nach den dort angegebenen Beispielen beträgt $d_{50}$ = 0,38 $\mu$m, wodurch es sich vom $Mg(OH)_2$ gemäß der Erfindung deutlich unterscheidet. Das Magnesiumhydroxid gemäß der Erfindung ist grobdispers. Das Magnesiumhydroxid gemäß EP 0 214 494 wird direkt zubereitet, und zwar in einstufiger Reaktion einer wässrigen Lösung von Magnesiumnitrat und Ammoniak bei 20 - 80 °C. Dieses Verfahren ist jedoch dadurch nachteilig, daß es zum einen einen komplizierten Steuerungsalgorithmus in bezug auf das Ausfällen von Magnesiumnitrat und zum anderen eine langsame Zugabe von Ammoniak in die wässrige Lösung des Hydroxidsalzes vorausgesetzt, Ammoniak in die wässrige Lösung des Hydroxidsalzes vorraussetzt, was die Reaktionszeit verlängert und den Herstellungsaufwand erhöht. In Bezug auf Verwendung von Magnesiumhydroxid als Verbrennungsretarder bei thermoplastischen werkstoffen und daraus folgenden Anforderungen an die Reinheit dieser Produkte ist es wünschenswert, daß sein Herstellungsverfahren nicht beinflußt durch Zusätze von anorganischen Salzen auf der Chlorid-Basis, wie es beim Verfahren nach der EP 0 365 437 ist, bei dem in das Reaktionsmedium $CaCl_2$ zugegeben wird.

Erfindungsgegenstand

Das gemäß der Erfindung verbesserte Magnesiumhydroxid ist schon mit neuen Strukturen (Eigenschaften) zubereitet und unterscheidet sich vom herkömmlichen Magnesiumhydroxid. Ferner wurde festgestellt, daß das vorgeschlagene Magnesiumhydroxid durch das erfindungsgemäße Verfahren herstellbar ist. Zweck der Erfindung ist es daher, $Mg(OH)_2$ mit neuer Struktur und besseren Eigenschaften bereitzustellen, das jedoch mit den bekannten Nachteilen nicht behaftet ist. Eine weitere Aufgabe der Erfindung ist es, ein Verfahren zur Herstellung von $Mg(OH)_2$ mit neuer Struktur und kommerziellen Vorteilen vorzuschlagen. Eine weitere Aufgabe der Erfindung ist es, Magnesiumhydroxid mit aufbereiteter bzw. nicht behandelter Oberfläche bereitzustellen, und zwar mit oberflächenaktiven Werkstoffen, so daß das Magnesiumhydroxid geeignete Eigenschaften bei Verwendung als Brenn- oder Glimmhemmer bei thermoplastischem, synthetischem Kautschuk hat. Eine weitere Aufgabe der Erfindung ist es, Magnesiumhydroxid mit obiger Struktur herzustellen, das in oberflächenbehandelter bzw. nicht behandelter Form breite Anwendung findet, und zwar insbesondere in jenen Bereichen, wo das herkömmliche Magnesiumhydroxid eingesetzt wird.

Das erfindungsgemäße Magnesiumhydroxid ist gekennzeichnet durch eine Kristallgröße in Richtung ⟨004⟩ größer als 150 Å und kleiner als 500 Å, einen Streckungsgrad im Bereich von 2 bis 5, einer Deformation in Richtung ⟨004⟩von maximal $4.2 \times 10^{-3}$, während die Deformation in Richtung 110 maximal $3.0 \times 10^{-3}$ beträgt. Das erfindungsgemäße Magnesiumhydroxid enthält außerdem 50% sekundärer Teilchen mit einem Durchmesser, der kleiner als 1.4 µm ist, 100% sekundärer Teilchen mit einem Durchmesser, der kleiner als 4.0 µm ist und besitzt eine nach dem BET-Verfahren bestimmte spezifische Oberfläche, die kleiner als 25 $m^2/g$ ist. Das vorgeschlagene Magnesiumhydroxid wird durch das erfindungsgemäße Verfahren in zwei Stufen hergestellt.

In der ersten Stufe wird auf Magnesiumnitrat mit einer alkalischen Verbindung eingewirkt, vorzugsweise Ammoniak, im wässrigen Medium, bei einer Temperatur von maximal 85 °C, vorzugsweise 50 °C bis 75 °C, bei atmosphärischem Druck, wobei die alkalische Verbindung, vorzugsweise Ammoniak, mit 1,5 bis 6,0fachem Überschuß, vorzugsweise 3,0 bis 5,0-fachem Überschuß, so verwendet wird, daß das pH der Reaktionsmischung alkalisch ist, vorzugsweise von 8 bis 11, wobei ein basisches Magnesiumnitrat entsteht. Dieses Magnesiumnitrat wird in zweiter Stufe hydrothermal und bei einer Temperatur von 110 °C bis 150 °C und einem Druck bis 1,5 MPa zersetzt, wobei das Einwirken in dieser erhöhten Temperatur und des entsprechenden Drucks nicht länger als 4 Stunden dauert. Es ist vorteilhaft, wenn in der zweiten Stufe die Zersetzung bei einer Temperatur von 120 °C bis 130 °C, einem Druck von 0,3 bis 1,3 MPa erfolgt und wenn das pH 8 bis 11 groß ist. Eine Drucksenkung im Apparat, in dem die zweite Stufe stattfindet, erfolgt derart, daß bei erhöhter Temperatur von 110 °C bis 150 °C der Druck auf 0,3 - 0,5 MPa durch Auslassen von Ammoniak herabgesetzt wird. Danach wird die Suspension auf eine Temperatur von 50 °C bis 60 °C abgekühlt, filtriert und nach Durchwaschen mit demineralisiertem wasser und Trocknen wird das Produkt gewonnen, oder, falls erforderlich, wird es vor dem Trocknen in demineralisiertem Wasser aufgeschlemt und mit einem geeigneten oberflächenaktiven Reagenzmittel behandelt. Ein solcher Bereitstellungs-Prozeß von Magnesiumhydroxid aus Magnesiumnitrat kann als chlorfrei bezeichnet werden, weil in das Reaktions-Medium in keiner Stufe anorganische Salze auf der Chlorid-Basis zugegeben werden.

Magnesiumnitrat als Ausgangsmaterial gemäß der Erfindung wird vorteilhafterweise durch kontinuierliches Zerlegen von gemahlenem Magnesiumkarbonat (Magnesit) in verdünnter Salpetersäure ($HNO_3$) bei erhöhter Temperatur und in Zersetzungsreaktoren gewonnen. Die finale saure Lösung von Magnesiumnitrat und nicht zerlegtem Magnesiumkarbonat verbleibt im Sedimentationsbehälter, in dem das nicht zerlegte Magnesiumkarbonat separiert und sodann zurück in den Reaktor gegeben wird. Die Lösung von saurem Magnesiumnitrat wird mit Gasammoniak neutralisiert, sowie durch Fällen von $Fe(OH)_3$ gewonnen und sodann mit Bandvakuumfilter isoliert. Das Konzentrat von Magnesiumnitrat wird in einem Fällungsgefäß mit $H_2O_2$ vermischt, das eine Fällung von MnO bewirkt. Anstatt $H_2O_2$ können auch Peroxyd-Sulfate oder alkalischer Metalle oder alkalische Erden verwendet werden. Ausgefälltes MnO, als Verunreinigung der Lösung, und der Rest von $Fe(OH)_3$ werden vom Konzentrat des Magnesiumnitrats getrennt. Das Konzentrat von Magnesiumnitrat ist somit für die Verwendung bei der Herstellung von Magnesiumhydroxid wiedergewonnen.

Das Magnesiumhydroxid gemäß der Erfindung verbessert nach Einarbeiten in thermoplastische Materialien ihre Eigenschaften, insbesondere ihre Feuerfestigkeit und das Oberflächenerscheinungsbild, ohne daß die physikalischen Eigenschaften der Materialien unerwünscht beeinflußt werden.

Es wurde festgestellt, daß der entscheidende Einfluß auf diese sowie auch auf andere Eigenschaften des Magnesiumhydroxid, vor allem die Charakteristiken der $Mg(OH)_2$ Kristalle, insbesondere ihre Gestalt, Größe und Kristallgitterdeformation, haben. Einzelne Kristalle aggregieren und bilden sekundäre Teilchen eckiger Form, die durch die spezifische Oberfläche $S_{Bet}$ und Größe (Distribution der Durchmesser der Teilchen) charakterisiert sind. Die Charakteristiken der sekundären Teilchen sind ebenso wichtig, aber diese sind schon von der Gestalt und Größe der Kristalle und von der Kristallgitterdeformation abhängig. Allgemein gilt, daß mit Verringerung der Kristallgröße die Fähigkeit der Kristalle zu aggregieren und sekundäre Teilchen von größeren Abmessungen und mit größerer spezifischer Oberfläche zu bilden wächst. Eine wichtige Feststellung, die sich aus den Resultaten ergibt, ist die Tatsache, daß der dominante Parameter des Kristalls, der die spezifische Oberfläche $S_{Bet}$ entscheidend beeinflußt, die Gestalt des Kristalls ist, die durch den Streckungsgrad AR repräsentiert ist, wobei AR = D/H , D ist der Durchmesser der Kristallgrundfläche, berechnet als die Größe des Kristalls in Richtung ⟨110⟩, und H ist die Kristallhöhe, berechnet als Kristallgröße in Richtung ⟨004⟩. Es wurde ferner festgestellt, daß wenn man Kristalle des Magnesiumhydoxids mit einem Streckungsgrad nicht kleiner als 2 und nicht größer 5 herstellt, diese nicht die Bedingung der maximalen Größe erfüllen müssen, sondern es genügt vielmehr, wenn die Kristallgröße in Richtung ⟨004⟩ größer ist als 150 Å und kleiner als 500 Å. Während vor allem die Form sowie die Größe des Kristalls notwendige Vorraussetzungen für Aggregationen der Kristalle in sekundäre Teilchen sind, charakterisiert die Kristallgitterdeformation die Tendenz der Kristalle, die durch die Oberflächenkräfte hervorgerufen wird, in sekundäre Teilchen zu aggregieren. Je kleiner der Wert der Kristallgitterdeformation ist, desto kleiner ist die Wahrscheinlichkeit der Bildung von großen sekundären Teilchen. Aus den durchgeführten Messungen geht hervor, daß bei gleichzeitiger Erfüllung der obigen Bedingungen bezüglich der Form und Größe des Kristalls es genügt, wenn die Deformation in Richtung ⟨004⟩ nicht größer als $4.2 \times 10^{-3}$ und die Deformation in Richtung ⟨110⟩ nicht größer als $3.0 \times 10^{-3}$ ist. Das Magnesiumhydroxid gemäß der Erfindung weist üblicherweise eine Deformation in Richtung ⟨004⟩ zwischen $1.0 \times 10^{-3}$ und $3.0 \times 10^{-3}$ und in Richtung ⟨110⟩ zwischen $0.5 \times 10^{-3}$ und $2.5 \times 10^{-3}$ auf.

Das erfindungsgemäße Magnesiumhydroxid besitzt neue charakteristische Eigenschaften, die durch die Röntgenpulverdiffraktometrische-Methode bestimmt werden können und durch die es sich von herkömmlichen Magnesiumhydroxiden unterscheidet, und zwar bezüglich der Kristallgröße in Richtung ⟨004⟩ von 150 bis 500 Å, des Streckungsgrades von 2 bis 5, der Deformation in Richtung ⟨004⟩ maximal $4.2 \times 10^{-3}$ und der Deformation in Richtung ⟨110⟩ maximal $3.0 \times 10^{-3}$. Bezüglich der Einarbeitung des Magnesiumhydroxid in thermoplastische Werkstoffe und den geforderten Eigenschaften hierbei hergestellter Werkstoffe ist es von Bedeutung, daß die sekundären Teilchen, die durch Agglomeration der Magnesiumhydroxidkristalle entstehen, homogene Verteilung der Teilchengröße aufweisen. In herkömmlicher Weise hergestelltes Magnesiumhydroxid enthält 50% von sekundären Teilchen mit einem Durchmesser von 3 bis 20 $\mu$m und 90% sekundärer Teilchen mit einem Durchmesser von 8 bis 40 $\mu$m. Magnesiumhydroxid gemäß EP 0 365 347 enthält 50% sekundärer Teilchen mit einem Durchmesser nicht größer als 1,5 $\mu$m und 90% Teilchen mit einem Durchmesser nicht größer als 4.0 $\mu$m. Dieses Magnesiumhydroxid wird jedoch für andere Zwecke als das vorgeschlagene Magnesiumhydroxid benutzt.

Bei der Herstellung des Magnesiumhydroxid gemäß der Erfindung aggregieren seine Kristalle in sekundäre Teilchen, von denen 50 % einen Durchmesser kleiner als 1.4 $\mu$m und 100% einen Durchmesser kleiner als 4.0 $\mu$m aufweisen, wobei die spezifische Oberfläche, nach der BET-Methode bestimmt, kleiner als 25 $m^2$/g ist.

## Messung der Kristallgröße und der Kristallgitterdeformation in Richtungen ⟨110⟩ und ⟨004⟩

Die Kristallgröße wurde nach der folgenden Formel berechnet

$$D = K \lambda/\beta \cos \theta$$

und die Kristallgitterdeformation wurde berechnet nach der Formel

$$e = \beta/4 \tan \theta$$

wo $\lambda$ die Wellenlänge der eingesetzten Röntgenstrahlung (in diesem Fall $CuK_\alpha$ mit einer Wellenlänge 1,5406 Å) ist, $\theta$ ist der Braggsche Winkel, $\beta$ ist die echte Breite der Diffraktionslinie der Probe in halber Höhe in Radianen und K ist die Gerätekonstante (hier K = 0,9).

Der $\beta$-Wert in den vorgegebenen Formeln wurde folgendermaßen bestimmt:

- die Diffraktionsprofile in Richtung ⟨110⟩ und ⟨004⟩ wurde mit Hilfe der $CuK_\alpha$-Strahlung gemessen,
- die Messungsbedingungen: Spannung 40 kV, Strom 30 mA, Goniometergeschwindigkeit 0.001°/s, Spinner eingeschaltet, automatische Divergenzblende, Austrittsblende 0.2 mm, Graphitmonochromator.

Physikalisch bedeutet "Kristallgröße in Richtung ⟨004⟩" Höhe des hexagonalen Plättchenkristalls $Mg(OH)_2$ und "Größe des Kristalls in Richtung ⟨110⟩" Durchmesser seiner Basis.

"Streckungsgrad", ist das Verhältnis der Kristallgröße in Richtung ⟨110⟩, das heißt Durchmesser seiner Basis, und der Kristallgröße in Richtung ⟨004⟩, das heißt Höhe des hexagonalen Plättchenkristalls. Bei definiertem Streckungsgrad und definierten Kristallgröße kann die Aggregation der Kristalle in Sekundarteilchen minimiert werden, wodurch ihr geringes $d_{50}$ und $S_{Bet}$ gewährleistet sind.

Die Profilbreite in halber Höhe für K $_1$ ergibt nach Subtraktion des Hintergrundes einen Wert $B_s$-Profilverbreiterung des gemessenen Materials.

Diffraktionsprofile, die dem Instrumentenprofil entsprechen, wurden mit Hilfe eines hochreinen Silizium (99.999%) unter Beibehaltung von denselben Messungsbedingungen gemessen. Die Profilbreite in halber Höhe für $K\alpha_1$ ergibt nach der Subtraktion des Hinter-

grundes den Wert $B_o$-Instrumentenverbreiterung des Profiles. Zahlenmäßig festgelegt ist der $B_o$-Wert 0.13320 in Richtung ⟨110⟩ und 0.14120 für die Richtung ⟨004⟩ Die Diffraktionsprofilverbreiterung, die durch das gemessene Material verursacht wurde, wurde dann berechnet nach den Formeln

$$\beta(\text{Kristallgröße}) = B_s - B_o \text{ und}$$

$$\beta(\text{Deformation}) = \sqrt{B_s^2 - B_o^2}.$$

Eine weitere bekannte Methode zur Feststellung der Kristallgröße und Kristalldeformation (Spannung) ist in den US-PSn 4 098 762 und 4 145 404 beschrieben, auf die später noch eingegangen wird. Dort sind weitere Verfahren zur Feststellung der Kristallgröße und -deformation offenbart, die hier verwendbar sind und die abweichende Werte liefern können. Bei Röntgendiffraktionsverfahren sind die Kristallgröße und -deformation an sich verschieden. Kleine Kristallgrößen haben eine Form von Diffraktionskurven mit Cauchyverteilung, während die Deformation Kurven mit Gaussverteilung bildet. Dieser Vorgang ist bekannt und z.B. in Klug and Alexander, X-Ray Diffraction Procedures, Wiley and Sons (1954 and 1974), Chap. 9 "Crystallite Size and Lattice Strains from Line Broadening" beschrieben.

## Messung der Teilchengröße

Die Teilchengröße wurde mit einem Laseranalysator (Pro-7000) gemessen. Der Analysator arbeitet auf dem Prinzip der Fraunhofferdiffraktion, die teilweise um die Mie'sche Theorie, die für Teilchen kleiner als 1 μm gilt, ergänzt wurde. Der Apparat wurde durch ein Computersystem gesteuert. Die Proben wurden in einem Wassermedium gemessen und mit Ultraschall dispergiert, und zwar über einen Zeitraum von höchstens 150 s.

## Messung der spezifischen Oberfläche

Messungen der spezifischen Oberfläche wurde in herkömmlicher Weise durchgeführt. Die Art, wie die Fläche der spezifischen Oberfläche mit BET-Methode gemessen wird, ist in den US-PSn 4 098 762 und 4 145 404 beschrieben. Nach Bedarf kann Magnesiumhydroxid gemäß der Erfindung mit oberflächenaktivem Stoff aufbereitet werden. Der oberflächenaktive Stoff ist an der Oberfläche fester Teilchen des Magnesiumhydroxid chemisch absorbiert, was zur Verbesserung von Eigenschaften führen kann, wenn Magnesiumhydroxid in thermoplastisches, synthetisches Kautschuk oder in wasserlöslichen Anstrich eingearbeitet wird. Die Menge des oberflächenaktiven Stoffes kann nach Bedarf dosiert werden, um bessere Ergebnisse zu erreichen. Solche oberflächenaktive Stoffe für Magnesiumhydroxid sind bekannt und z.B. in den US PSn 4 098 762 und 4 145 404 beschrieben, jedoch nicht nur auf diese beschränkt. Thermoplastische, synthetische Bitumen, speziell für die Verwendung bei flüssigen Formen, können durch Zumischen von aufbereitetem oder nicht aufbereitetem Mg(OH)₂ gemäß der Erfindung aufbereitet werden. Verwendete thermoplastische, synthetische Bitumen sind dem zuständigen Fachmann bekannt und z.B. in den US PSn 4 098 762 und 4 145 404 beschrieben, jedoch nicht nur auf diese beschränkt. Die Menge des Magnesiumhydroxids, das in thermoplastische Werkstoffe beigemischt wird, kann nach Belieben angepaßt werden, um die gewünschten Eigenschaften zu erreichen.

Ferner können in Gemische thermoplastischer Bitumen oder Gemische von Anstrichen gemäß der Erfindung herkömmliche Additive in bekannten Mengen beigemischt werden. Solche Additive sind Pigmente, Antioxidante, UV-Absorber, Weichmacher, Schlichte usw. Beispiele solcher herkömmlicher Additive in üblichen Mengen sind in den US PSn 4 098 762 und 4 145 404 beschrieben.

Nachstehende Beispiele und Vergleichsbeispiele sollen die Erfindung näher erläutern.

## Beispiele der Erfindungsrealisation

Beispiel 1

1 l Wasserlösung des Magnesiumnitrat mit einer Konzentration 2 Mol/l wird in einem Reaktionsgefäß mit einem Volumen von 2.5 l, das mit einem Wärmer und einem Rührer ausgestattet ist, auf eine Temperatur von 70° C erwärmt. Bei intensiver Rührung wird 5 Minuten lang gleichmäßig 0.9 l Ammoniakwasser mit einer Konzentration von 11.9 Mol/l zugesetzt. 1 l auf diese Weise entstandener Suspension wird in einen 1.5 l Druckapparat umgegossen, der dann verschlossen und auf eine Temperatur von 130° C erhitzt wird. Bei dieser Temperatur wird die Suspension 1 Stunde lang gehalten, wobei der Druck auf 0.6 MPa steigt. Nach einer Stunde wird die Reaktionsmischung gekühlt, die Suspension wird abgefiltert, mit deminieralisiertem Wasser durchgewaschen und getrocknet.

Das so entstandene Produkt wurde sodann mit Hilfe der röntgenpulverdiffraktometrischen Methode analysiert. Dabei wurden eine Kristallgröße von 315 Å in Richtung ⟨004⟩, ein Streckungsgrad 2.81, eine Deformation $2.12 \times 10^{-3}$ in Richtung ⟨004⟩ und eine Deformation $1.52 \times 10^{-3}$ in Richtung ⟨110⟩ gemessen.

Beispiel 2

Man geht vor wie im Beispiel 1 mit dem Unterschied, daß die Konzentration des Ammoniakwassers 15.7 Mol/l beträgt, infolgedessen steigt der Druck bei der Bearbeitung der Suspension auf 1.1 MPa.

Das auf diese Weise entstandene Produkt weist eine Kristallgröße von 315 Å in Richtung ⟨004⟩ einen Streckungsgrad 3.53, eine Deformation $2.18 \times 10^{-3}$ in

Richtung ⟨004⟩ und eine Deformation 1.45 x $10^{-3}$ in Richtung ⟨110⟩ auf.

Es wurden 50% Teilchen mit einem Durchmesser kleiner als 1.1 μm festgestellt und alle Teilchendurchmesser waren kleiner als 4 μm. Die spezifische Oberfläche, nach dem BET-Verfahren bestimmt, hat 9.9 $m^2$/g betragen.

## Beispiel 3

Man geht vor wie im Beispiel 1 mit dem Unterschied, daß die Dauer der Druckwirkung auf 4 Stunden verlängert wird.

Das auf diese Weise entstandene Produkt weist eine Kristallgröße von 309 Å in Richtung ⟨004⟩, einen Streckungsgrad 5.38, eine Deformation 2.19 x $10^{-3}$ in Richtung ⟨004⟩ und eine Deformation 1.31 x $10^{-3}$ in Richtung ⟨110⟩ auf.

Es wurden 50% Teilchen mit einem Durchmesser kleiner als 1.0 μm festgestellt und alle Teilchendurchmesser waren kleiner als 4 μm. Die spezifische Oberfläche, nach dem BET-Verfahren bestimmt, war 6.57 $m^2$/g.

## Beispiel 4

Man geht vor wie im Beispiel 1 mit dem Unterschied, daß 20 Minuten lang gleichmäßig 1.3 l Ammoniakwasser mit einer Konzentration 15.7 Mol/l zugesetzt wurde. Die Druckwirkungsdauer beträgt 4 Stunden und der Druckwert ist 1.3 MPa.

Das auf diese Weise entstandene Produkt weist eine Kristallgröße von 355 Å in Richtung ⟨004⟩, einen Streckungsgrad 3.73, eine Deformation 2.12 x $10^{-3}$ in Richtung ⟨004⟩ und eine Deformation 1.43 x $10^{-3}$ in Richtung ⟨110⟩ auf.

Es wurden 50% Teilchen mit einem Durchmesser kleiner als 1.1 μm festgestellt und alle Teilchendurchmesser waren kleiner als 4 μm. Die spezifische Oberfläche, nach dem BET-Verfahren bestimmt, war 8.83 $m^2$/g.

## Beispiel 5

Man geht vor wie im Beispiel 1 mit dem Unterschied, daß die Suspension in einer Druckvorrichtung 40 Minuten lang bei einer Temperatur von 120° C gehalten wird. Der Druck stieg auf 0,5 MPa.

Das auf diese Weise entstandene Produkt weist eine Kristallgröße von 301 Å in Richtung ⟨004⟩, einen Streckungsgrad 2,63, eine Deformation 2.49 x $10^{-3}$ in Richtung ⟨004⟩ und eine Deformation 2.01 x $10^{-3}$ in Richtung ⟨110⟩ auf.

Es wurden 50% Teilchen mit einem Durchmesser kleiner als 1.06 μm festgestellt und alle Teilchendurchmesser waren kleiner als 4 μm. Die spezifische Oberfläche, nach dem BET- Verfahren bestimmt, war 8.6 $m^2$/g.

## Beispiel 6 (Vergleichsbeispiel)

1 l Wasserlösung des Magnesiumnitrat mit einer Konzentration 2.0 Mol/l wird in einem Reaktionsgefäß mit einem Volumen 2.5 l (mit einem Wärmer und einem Rührer) auf eine Temperatur von 70° C erwärmt. Bei intensivem Rühren wird der Lösung 20 Minuten lang gleichmäßig 0.9 l Ammoniakwasser mit einer Konzentration 4.0 Mol/l zugesetzt. 1 l auf diese Weise entstandener Suspension wird in ein 1.5 l Druckgefäß umgegossen, das dann verschlossen und schließlich auf eine Temperatur von 130° C erhitzt wird. Bei dieser Temperatur wird die Suspension 1 Stunde lang gehalten, wobei der Druck auf 0.25 MPa steigt. Nach einer Stunde wird die Reaktionsmischung gekühlt, die Suspension wird abgefiltert, mit demineralisiertem Wasser durchgewaschen und schließlich getrocknet.

Das auf diese Weise entstandene Produkt weist eine Kristallgröße von 259 Å in Richtung ⟨004⟩, einen Streckungsgrad 8.5, eine Deformation 2.98 x $10^{-3}$ in Richtung ⟨004⟩ und eine Deformation 1.08 x $10^{-3}$ in Richtung ⟨110⟩ auf.

Es wurden 50% Teilchen mit einem Durchmesser kleiner als 2.1 μm festgestellt und 90% Teilchendurchmesser waren kleiner als 4 μm. Die spezifische Oberfläche, nach dem BET-Verfahren bestimmt, war 26.39 $m^2$/g.

## Beispiel 7 (Vergleichsbeispiel)

Man geht vor wie im Beispiel 5 mit dem Unterschied, daß die Konzentration des Ammoniakwassers bei der Fällung 11.9 Mol/l, die Temperatur der hydrothermalen Bearbeitung 100° C und der Druck 0.6 MPa betragen.

Das auf diese Weise entstandene Produkt weist eine Kristallgröße von 111 Å in Richtung ⟨004⟩, einen Streckungsgrad 9.6, eine Deformation 6.11 x $10^{-3}$ in Richtung ⟨004⟩ und eine Deformation 1.63 x $10^{-3}$ in Richtung ⟨110⟩ auf.

Es wurden 50% Teilchen mit einem Durchmesser kleiner als 3.7 μm festgestellt und 90% Teilchendurchmesser waren kleiner als 5.4 μm. Die spezifische Oberfläche, nach dem BET-Verfahren bestimmt, war 32.68 $m^2$/g.

## Beispiel 8 (Verleichsbeispiel)

Man geht vor wie im Beispiel 5 mit dem Unterschied, daß die Wasserlösung des Magnesiumnitrat nur auf 15° C erwärmt wird und das Ammoniakwasser mit einer Konzentration 14.7 Mol/l gleichmäßig 5 Minuten lang zugesetzt wird. Die Druckwirkung auf die Suspension dauert 4 Stunden, und zwar bei einem Druck von 0.8 MPa und einer Temperatur von 130°C.

Das auf diese Weise entstandene Produkt weist eine Kristallgröße von 512 Å in Richtung ⟨004⟩, einen Streckungsgrad 1.62, eine Deformation 1.94 x $10^{-3}$ in

Richtung ⟨004⟩ und eine Deformation 1.88 x 10$^{-3}$ in Richtung ⟨110⟩auf.

Es wurden 50% Teilchen mit einem Durchmesser kleiner als 3.1 µm festgestellt und 90% Teilchendurchmesser waren kleiner als 6.3 µm. Die spezifische Oberfläche, nach dem BET-Verfahren bestimmt, war 29.42 m$^2$/g.

Den Vergleichsbeispielen 6, 7 und 8 ist zu entnehmen, daß die Bereitstellungsvorraussetzungen direkten Einfluß auf strukturelle Eigenschaften des Magnesiumhydroxid haben, insbesondere auf das Spektralverhältnis, die Deformation und die Größe der Kristalle in Richtung ⟨004⟩.

Es ist offensichtlich, daß viele Vorteile des Mg(OH)$_2$ vom zuständigen Fachmann überprüfbar sind. Es ist ersichtlich, daß im Rahmen der Erfindung eine Vielzahl von Ausführungsmöglichkeiten möglich sind. Die Beschreibung ist daher beispielhaft und die Erfindung ist nicht auf diese Beispiele beschränkt.

**Patentansprüche**

1. Magnesiumhydroxid entsprechend der Formel Mg(OH)$_2$ mit einer Kristallgröße in Richtung ⟨004⟩ größer als 150 Å und kleiner als 500 Å, einem Streckungsgrad im Bereich von 2 bis 5, einer Deformation in Richtung ⟨004⟩ maximal 4.2 x 10$^{-3}$ und einer Deformation in Richtung ⟨110⟩ maximal 3.0 x 10$^{-3}$.

2. Magnesiumhydroxid nach Anspruch 1 mit 50% sekundärer Teilchen mit einem Durchmesser kleiner als 1.4 µm und 100% sekudärer Teilchen mit einem Durchmesser maximal 4.0 µm.

3. Magnesiumhydroxid nach Anspruch 2 mit einer spezifischen Oberfläche, die nach dem BET-Verfahren bestimmt wurde, kleiner als 25 m$^2$/g.

4. Verfahren zur Herstellung von Magnesiumhydroxid nach einem der Ansprüche 1 bis 3 durchgeführt in chlorfreien zwei Stufen und ausgehend von Magnesit,
   dadurch gekennzeichnet,
   daß in der ersten Stufe mit einer alkalischen Verbindung, insbesondere Ammoniak, auf Magnesiumnitrat eingewirkt wird, und zwar im Wassermedium, bei einer Temperatur von maximal 85 °C und bei einem atmosphärischen Druck, wobei die alkalische Verbindung, vorzugweise Ammoniak, mit einem 1,5 bis 6,0fachen Überschuß eingesetzt wird und wobei das pH der Mischung alkalisch ist, und unter Bildung eines basischen Magnesiumnitrats, das in zwei Stufen sich im alkalischen Milieu bei einer Temperatur von 110 °C bis 150 °C und einem Druck von 1,5 MPa zerlegt, wobei die Einwirkung dieser erhöhten Temperatur nicht länger als 4 Stunden dauert.

5. Verfahren nach Anspruch 4,
   dadurch gekennzeichnet,
   daß in der ersten Stufe vorzugsweise mit 3.0 bis 5.0fachen Überschuß an Ammoniak eingewirkt wird, und zwar bei einer Temperatur von 50 bis 75 °C, wobei das pH der Reaktionsmischung 8 bis 10 beträgt.

6. Verfahren nach Anpruch 4,
   dadurch gekennzeichnet,
   daß in der zweiten Stufe die Zerlegung vorzugsweise bei einer Temperatur von 120 °C bis 130 °C, einem Druck von 0,3 bis 1,3 MPa und einem pH von 8 bis 10 erfolgt.

**Claims**

1. Magnesium hydroxide corresponding to the formula Mg(OH)$_2$ with a crystal size in the direction ⟨004⟩ greater than 150 Å and smaller than 500 Å, a degree of expansion in the range between 2 and 5, a maximum deformation in the direction ⟨004⟩of 4.2 x 10$^{-3}$ and a maximum deformation in the direction ⟨110⟩of 3.0 x 10$^{-3}$.

2. Magnesium hydroxide according to claim 1, having 50 % secondary particles with a diameter less than 1.4 µm and 100 % secondary particles with a maximum diameter of 4.0 µm.

3. Magnesium hydroxide according to claim 2, having a specific surface, which was determined according to the BET method, of less than 25 m$^2$/g.

4. Method of producing magnesium hydroxide according to one of claims 1 to 3, accomplished in two chlorine-free stages and from magnesite, characterised in that, in the first stage, magnesium nitrate is acted upon with an alkaline compound, more especially ammonia, namely in the water medium, at a maximum temperature of 85° C and at an atmospheric pressure, the alkaline compound, preferably ammonia, being used with a 1.5- to 6.0-times excess, and the pH of the mixture being alkaline, and by forming a basic magnesium nitrate which decomposes in two stages in the alkaline environment at a temperature of between 110° C and 150° C and at a pressure of 1.5 MPa, the application of this high temperature lasting no longer than 4 hours.

5. Method according to claim 4, characterised in that the operation is preferably effected in the first stage with 3.0- to 5.0-times excess ammonia, namely at a temperature of between 50 and 75° C, the pH of the reaction mixture being 8 to 10.

6. Method according to claim 4, characterised in that the decomposition is preferably effected in the second stage at a temperature of between 120° C and 130° C, at a pressure of between 0.3 and 1.3 MPa and at a pH of between 8 and 10.

**Revendications**

1. Hydroxyde de magnesium de la formule $Mg(OH)_2$ avec une grandeur de cristal en direction ⟨004⟩ supérieure à 150 Å et inférieure à 500 Å, avec une limite d'élasticité dans la fourchette de 2 à 5, avec une défomation en direction ⟨004⟩de maximum 4.2 $\times 10^{-3}$ et avec une déformation en direction ⟨110⟩de maximum $3.0 \times 10^{-3}$.

2. Hydroxyde de magnésium suivant la revendication 1 avec 50% de particules secondaires d'un diamètre inférieur à 1.4 μm et avec 100% de particules secondaires d'un diamétre de maximum 4.0 μm.

3. Hydroxyde de magnésium suivant la revendication 2 avec une surface spécifique déterminée par la méthode BET qui est inférieure à 25 $m^2$.

4. Procédé de fabrication d'hydroxyde de magnésium suivant l'une quelconque des revendications de 1 à 3, exécuté en deux étapes exemptes de chlore et à partir de magnésite,
caractérisé
en ce que dans la première étape un composé alcalin, notamment de l'ammoniaque, agit sur du nitrate de magnésium et cela en milieu aqueux, à une température maximale de 85 °C et sous pression atmosphérique, où le composé alcalin, de préférence de l'ammoniaque, est mis en oeuvre avec un excès de 1,5 à 6,0 fois et où le pH du mélange est alcalin, et avec formation d'un nitrate de magnésium basique, qui se décompose en deux étapes en milieu alcalin à une température de 110 °C à 150 °C et sous une pression de 1,5 MPa, l'action de cette température accrue ne durant pas plus de 4 heures.

5. Procédé suivant la revendication 4,
caractérisé
en ce qu'au cours de la première étape il est mis en oeuvre un excès d'ammoniaque de 3.0 à 5.0 et cela à une température de 50 °C à 75 °C, tandis que le pH du mélange de réaction est de 8 à 10.

6. Procédé suivant la revendication 4,
caractérisé
en ce qu'au cours de la deuxième étape la décomposition a lieu de préférence à une température de 120 °C à 130 °C, une pression de 0,3 à 1,3 MPa et un pH de 8 à 10.